# EUROPÄISCHE PATENTANMELDUNG

(11) **EP 0 523 361 A1**
(43) Veröffentlichungstag der Anmeldung: **20.01.1993**
(21) Anmeldenummer: 92109318.3
(22) Anmeldetag: 02.06.1992
(51) Int. Cl.: B21D 15/10, F16L 9/04, F16L 9/12

(54) **Rohr mit Rippen und Verfahren zu seiner Herstellung**

(30) Priorität: 16.07.1991 DE 4123559
(71) Anmelder: Gesellschaft für Innenhochdruckverfahren mbH & Co.KG, D-73431 Aalen (DE)
(72) Erfinder: Bögel, Helmut, W-7080 Alen (DE)
(74) Vertreter: Neidl-Stippler, Cornelia, Dr.

(57) **Zusammenfassung**

Die Erfindung betrifft ein ein- oder mehrschichtiges Metallrohr mit mindestens einer außen oder innen angeordneten Rippe in der Rohrwand, bei dem die Rippen (16) in der der Rohrwand so ausgebildet sind, daß der Faserverlauf des Metalls/der Metalle im wesentlichen parallel zur Rohraußen- oder -innenwand ist sowie ein Verfahren zu seiner Herstellung, mit den Schritten: Einbringen eines Ausgangsrohrs in eine Form mit beweglichen Teilen; Schließen der Form um das Ausgangsrohr; Abdichten der Rohrenden, sowie Einbringen eines Fluids unter hohem Druck in das Innere des Ausgangsrohrs zur Abstützung desselben; gegebenenfalls gleichzeitiges Nachführen von Rohrmaterial in Rohrlängsachsenrichtung unter Bewegung von beweglichen Formteilen, wodurch die Rohrwand entsprechend der Form nach außen gedrückt und unter Abstützung durch das Fluid umgeformt wird; sowie Druckabbau und Öffnen der Form.

## Beschreibung

Die Erfindung betrifft ein Metallrohr mit mindestens einer außen oder innen angeordneten Rippe in der Rohrwand sowie verfahren zu seiner Herstellung.

Insbesondere betrifft die Erfindung relativ dickwandige Metallrohre mit Rippen, wobei bei Stahl Rohrwanddicken von etwa 0,8 bis etwa 10 mm infrage kommen.

Rippen an Rohren können die verschiedensten Funktionen erfüllen und sind daher häufig erwünscht, mußten bisher aber bei dickeren Rohren mit großem Aufwand hergestellt werden.

Unter Rippe wird im Zusammenhang mit dieser Anmeldung dabei eine lange, schmale Erhöhung, die bspw. auf einer ggf. gebogenen Wand oder Fläche ausgebildet ist, verstanden, wobei häufig am Rippenboden eine Vertiefung in der Rohrwand ausgebildet ist.

Bisher wurden Vertiefungen in einer Rohrwand, bspw. Gewinde, aufwendig durch Schneidwerkzeuge ausgefräst - dies gilt beispielsweise für Schraubengewinde und dergleichen; dies führte üblicherweise zu einer Materialschwächung und der Notwendigkeit, eine höhere Wanddicke als in den übrigen Teilen des Rohres gefordert, vorzusehen.

Eine weitere Problematik bestand darin, daß einfache Stahlrohre gegen Biegebeanspruchungen eine geringere Widerstandsfähigkeit besitzen als Stahlrohre gleicher Wandstärke mit eingeformten Längsrippen, die zur Verstärkung dienen können. Durch in Rohrlängsrichtung eingeformte Verstärkungsrippen ist es möglich, unter erheblicher Gewichtseinsparung knickfeste bzw. höher biegebelastbare Rohre herzustellen.

Eine weitere Anordnungsmöglichkeit von Rippen an Stahlrohren sind quer verlaufende Rippen, die beispielsweise als Sollstauchstellen oder Sollbruchstellen vorgesehen werden können, wie dies beispielsweise bei Teilen in Kraftfahrzeugen in der sogenannten "Knautschzone" erwünscht ist.

Ein weiteres Problem bisher bekannter Rohre mit Rippen oder Rillen bestand darin, daß diese entweder gegossen werden mußten, mit den üblichen Nachteilen von Gußteilen, oder aber aus dem Vollen gefräst wurden, was ebenfalls außerordentlich aufwendig und für viele Anwendungsgebiete ökonomisch nicht sinnvoll ist.

Ferner besteht heutzutage eine erhöhte Nachfrage nach biegefesten, aber leichten Teilen, die noch dazu sehr leicht entsorgbar bzw. wiederverwendbar sind, wie dies im überragendem Maße für das Material Stahl oder Metall an sich gilt. Im Gegensatz zu dem häufig verwendbaren leichtgewichtigeren Kunststoff tritt bei Stahl keinerlei Problem hinsichtlich der Recyclingfähigkeit auf, da dieser in üblicher Form eingeschmolzen und wieder zu neuen Gegenständen geformt werden kann, während dies bei den meisten Kunststoffen nicht möglich ist. Ein weiterer Vorteil von Stahl in diesem Zusammenhang besteht auch darin, daß ein bestehendes Schrottverwertungs- und entsorgungssystem genutzt werden kann, während bei den vielfältigen Arten Kunststoffe bisher bereits Probleme bei der Klassifizierung, Sortierung und entsprechenden Zuordnung auftreten.

Ein großer Nachteil von Stahl oder auch anderen Metallen war für viele Einsatzzwecke bisher das hohe Gewicht von daraus hergestellten rohrförmigen Teilen, das notwendig war, um gegenüber Verformungen resistente Gegenstände, bspw. hochbiegefeste Teile, herzustellen, was bei Kunststoff beispielsweise durch faserverstärkte Kunststoffe leicht erzielt werden konnte.

Die Aufgabe wird erfindungsgemäß durch ein Metallrohr mit außen oder innen angeordneten Rippen in der Rohrwand gelöst, wobei die Rippen in der Rohrwand so ausgebildet sind, daß der Faserverlauf des Metalls parallel zur Rohraußen- oder innenwand ist.

Weiterhin bezieht sich die Erfindung auf ein Verfahren zur Herstellung desselben, mit:
Einbringen eines Ausgangsrohrs in eine Form mit beweglichen Teilen;
Schließen der Form um das Ausgangsrohr;
Abdichten der Rohrenden, sowie
Einbringen eines Fluids unter hohem Druck in das Innere des Ausgangsrohrs zur Abstützung desselben und
gegebenenfalls gleichzeitiges Nachführen von Rohrmaterial in Rohrlängsachsenrichtung unter Bewegung der beweglichen Formteile, wodurch die Rohrwand entsprechend der Form nach außen gedrückt und unter Abstützung durch das Fluid umgeformt wird; sowie
Druckabbau und Öffnen der Form.

Ein typischer Fluiddruck, der zum Umformen bspw. von Stahlrohren benötigt wird, liegt im Bereich von bis zu etwa 10.000 bar.

Es ist nun in überraschender Weise gelungen, ein durch Profilwahl, nämlich Rippen, verändertes Rohrteil einfach und in verfahrenstechnisch überraschend einfacher Weise herzustellen. So weist ein Rohr mit Verstärkungslängsrippen bei gleicher Festigkeit ein erheblich geringeres Gewicht als bekannte Rohre aus dem gleichen Material gleicher mechanischer Widerstandsfähigkeit auf. Diese rohrförmigen Teile können noch dazu erfindungsgemäß beim Umformen des Ausgangsrohrs so verformt werden, daß in ihrem Bodenbereich Schraubgewinde entsprechende Rippen oder sonstige rippenartige Verbindungsprofile an ihren Enden angeformt werden, die ohne Materialschwächung aufgebracht werden.

Dabei ist es bevorzugt, daß das Metallrohr aus einem kalt umformbaren Metall, wie Stahl, Kupfer, Aluminium, Titan, Nickel oder Legierungen derselben besteht.

Das Rohr kann aber auch aus mehreren aufeinanderliegenden Schichten gleicher oder unterschiedlicher Materialien besteht, die parallel zueinander verlaufen. Eine derartige mehrschichtige Anordnung ermöglicht es, Rohre mit Außenwänden herzustellen, die den jeweiligen Umgebungsbedingungen angepaßt sind; so kann bspw. eine korrosionsfeste Innenwand aus einem entsprechenden Material vorgesehen sein, während die übrigen Materialschichten andere Eigenschaften, bspw. der erhöhten mechanischen Festigkeit, aufweisen, die die korrosionsfeste Innenschicht nicht besitzt. Ein weiterer Vorteil von mehrschichtigen Rohren ist, daß diese nicht leicht in Schwingungen geraten, da die Schwingungsfortpflanzung in mehrschichtigen Materialien, die unterschiedliche Schwingungsleitfähigkeit haben, gestört ist. Dies kann insbesondere in Pumpenleitungen od. dgl., wo eine Kumulation der durch die Pumpenschläge angeregten Schwingungen unerwünscht ist, vorteilhaft sein.

Meist sind die verschiedenen Materialschichten zumindest teilweise unterschiedliche Metalle.

Es kann aber auch bevorzugt sein, daß mindestens eine der Materialschichten ein Polymer, Glas oder Keramik ist, wobei hierunter nur solche Materialien fallen sollen, die kaltverformbar sind. Bevorzugt sind diese Materialien auch kaltverfestigbar.

Die erfindungsgemäßen Rohre haben Rippen, die bevorzugt Längs- oder Querrippen sind oder helix- oder schraubenförmig auf dem Rohr verlaufen.

Bei einer typischen Ausgestaltung eines erfindungsgemäßen Rohrs aus Stahl ist die Wanddicke des Ausgangsrohrs bei Verwendung eines Stahlrohrs als Ausgangsrohr zwischen etwa 0,8 und etwa 10 mm, bevorzugt zwischen 1 und 4 mm.

Allgemein ist festzustellen, daß hier unter "Rohr" und zwar sowohl Ausgangsrohr als auch Produkt-Rohr, Hohlkörper verstanden werden, die im wesentlichen einen geringeren Innendurchmesser aufweisen, als Länge und dieser Begriff keineswegs auf kreisförmige Hohlkörper eingeschränkt ist, sondern auch Vierkantrohre, Sechskantrohre und andere Hohlkörper mit nicht kreisförmigem Querschnitt beinhaltet.Hierunter werden auch erfindungsgemäß gekrümmte Rohre, also Knie od. andere Kurvenstücke, verstanden.

Bevorzugt wird das Ausgangsrohr für ein mehrschichtiges erfindungsgemäß umgeformtes Rohr mit Rippen aus mehreren ineinander angeordneten, nicht notwendigerweise paßgenau aufeinanderliegenden Metallrohren gebildet wird, wobei das Metall der Metallrohre gleich oder unterschiedlich sein kann, wobei nach Durchführung des Verfahrens, d.h. nach Beaufschlagung der verschiedenen Rohrschichten mit Druck diese aneinander angelegt werden und so fest aufeinanderliegen und über Form- und Reibschluß parallel zueinander, auch in den ausgebildeten Rippen, verlaufen. Gleichzeitig mit Metall können auch andere Materialien, bspw. Keramik oder Kunststoffe, mit umgeformt werden, vorausgesetzt, sie eignen sich für Umformverfahren und unter Metallrohr sollen hier auch Rohre verstanden werden, die nur teilweise aus Metall bestehen und auch ein oder mehrere andere Materialien schichtartig aufweisen können. Geeignete Metalle sind bspw. unlegierte und legierte Stähle, warmfeste Stähle, Vergütungsstähle, unlegiert und legiert, warmfeste Stähle und nichtrostende Stähle; ferner eignen sich auch Aluminium, Aluminium-Legierungen; Titan und Titanlegierungen, Kupfer und dessen Legierungen sowie Nickel u. dgl., wobei es bevorzugt ist,daß der Werkstoff ein weitgehend konturgetreues Ausfüllen der Werkzeugform gewährleistet. Bei den Stahlwerkstoffen wird eine niedrige Fließspannung, ein hohes Formänderungsvermögen und eine geeignete Verfestigung nach dem Umformen in vielen Fällen gefordert.

Für besondere Ausgestaltungen der umgeformte Rohre, bspw. dann, wenn eine gegenüber bestimmten, korrosiven Chemikalien, wie Säuren oder Laugen, beständige Innen- oder Außenwand gefordert wird, kann es günstig sein, wenn mindestens eine der Schichten ein Polymer ist.

Vorteilhafte Weiterbildungen der Erfindung ergeben sich aus den Unteransprüchen.

Das hier eingesetzte Innenhochdruckumformverfahren ist beispielweise in Industrieanzeiger Nr. 20 vom 9.3.1984 beschrieben worden oder auch in Metallumformtechnik, Ausgabe 1D/91, S.15 ff.: A. Ebbinghaus: Präzisions-Werkstücke in Leichtbauweise, hergestellt durch Innenhochdruck-Umformen" oder auch Werkstatt und Betrieb 123 (1990), 3, S. 241 - 243: A. Ebbinghaus: "Wirtschaftliches Konstruieren mit Inenhochdruckumgeformten Präzisionswerkstücken" oder auch Werkstatt und Betrieb 122 (1991), 11 (1989), S. 933 - 938, auf deren Offenbarung hier zur Vermeidung von Wiederholungen in vollem Umfang bezug genommen wird. Dieses Verfahren wurde bisher für die Herstellung von Flanschen bzw. zur Herstellung von gebauten Nockenwellen zur Befestigung von Nocken an einem Rohr zur Herstellung von hohlen Nockenwellen eingesetzt. Bei diesen Teilen wurden bisher stets größere Bereiche des Rohrs erweitert.

Überraschenderweise läßt sich durch dieses Innenhochdruckverfahren nun ein völlig neuer Gegenstand, nämlich ein geripptes Metallrohr, insbesondere Stahlrohr, herstellen, das gegenüber herkömmlichen Rohren mit Rippen eine höhere Festigkeit bei gleichzeitiger Materialersparnis und preiswerterer Herstellbarkeit besitzt. Dabei soll darauf hingewiesen werden, daß erfindungsgemäß keine Wellrohre, wie sie aus dünnen Metallblechen bereits als flexible Rohre bekannt sind, beansprucht werden, sondern Metallrohre mit Wandstärken von etwa 0,8 bis etwa 5mm die Rippen, also Erhebungen auf der Rohrwand, die nicht hohl sind, aufweisen.

Durch das Innenhochdruckumformverfahren wird nämlich - im Gegensatz zu anderen Herstellungsverfahren - ein paraller Faserverlauf zur Wand des Stahlrohrs erzielt, was zu einer erhöhten Widerstandsfähigkeit des Rohres führt.

Erfindungsgemäß können nun auch Gewinde oder dergleichen beim Rohr angeformt werden, die bisher geschnitten werden mußten, so daß einfache Schraubverbindungen der Rohrenden bereits in dem gleichen Arbeitsgang wie die Herstellung der Rippen, erfolgen können. In diesem Zusammenhang ist auch anzumerken, daß es auch möglich ist, daß ein Rohrende, das mit dem Ende eines anderen Rohrs verbunden werden soll, als Innenwerkzeug zur Herstellung der Form des außenliegenden anderen Rohrteils eingesetzt werden kann und dadurch eine optimale Passung erzielt werden kann.

In vorteilhafter Weise können nun auch Rippen im Rohr innen oder außen angeformt werden, die schraubenförmig oder helixartig verlaufen, wodurch beispielsweise bei der Förderung von Schlämmen oder Stäuben eine bessere Verwirbelung des Materials und eine Verminderung des Absetzens des Materials in Bereichen laminarer Strömung erzielt werden kann, indem durch die eingeformten Rohrprofile stets eine Turbulenz an der Rohrwand erzielt wird, die das Entstehen eines laminaren Flusses im Bereich der Rohrwand und damit ein Absetzen des Material stattfinden kann. Diese und ähnliche Ausgestaltungen können insbesondere bei Rohrkrümmern, die besondere Störungsstellen innerhalb einer Rohrleitung darstellen, von besonderer Bedeutung sein.

Nachfolgend soll die Erfindung anhand von Zeichnungen, die bevorzugte Ausführungsformen der Erfindung in nicht maßstäblicher, schematischer Form darstellen, erläutert werden. Dabei zeigt:
- Fig. 1a: einen Querschnitt durch ein Ausgangsrohr für ein er findungsgemäßes Rohr mit Längsrippen
- Fig. 1b: ein aus dem Ausgangsrohr der Fig. 1a hergestelltes Rohr mit Längsrippen, im Querschnitt
- Fig. 2a: einen Längsschnitt durch ein Ausgangsrohr für ein erfindungsgemäßes Rohr mit Querrippen
- Fig. 2b: einen Längsschnitt durch ein Rohr mit Querrippen
- Fig. 3: eine perspektivische Darstellung eines erfindungsgemäßen Rohrs mit Außen- und Innnengewinde
- Fig. 4: eine perspektivische Darstellung eines Längsschnittes durch ein erfindungsgemäßes Rohr mit sprialförmiger Innenrippe
- Fig.5a: einen Querschnitt durch ineinander angeordnete Aus gangsrohre als Ausgangsprodukt für ein erfindungsgemäßes mehrschichtiges Rohr mit Rippen
- Fig.5b: ein mehrschichtiges Rohr mit Längsrippen, im Querschnitt
- Fig.6a: einen Längsschnitt durch ein Ausgangsrohr für ein erfindungsgemäßes Rohr mit Querrippen
- Fig.6b: einen Längsschnitt durch das aus dem Ausgangsrohr der Fig.6a gebildete mehrschichtige Rohr mit Querrippen;
- Fig.7: eine perspektivische Darstellung eines erfindungsgemä ßen mehrschichtigen Rohrs mit Außen- und Innnengewinde;
- Fig.8: eine perspektivische Darstellung eines Längsschnittes durch ein erfindungsgemäßes Rohr mit spiralförmiger Innenrippe
- Fig.9: einen schematischen vergrößerten Schnitt durch ein Wandteil eines erfindungsgemäßen Rohres aus einem Metall; und
- Fig.10: einen schematischen vergrößerten Schnitt durch ein Wandteil eines erfindungsgemäßen Rohres aus mehreren Schichten
zeigt.

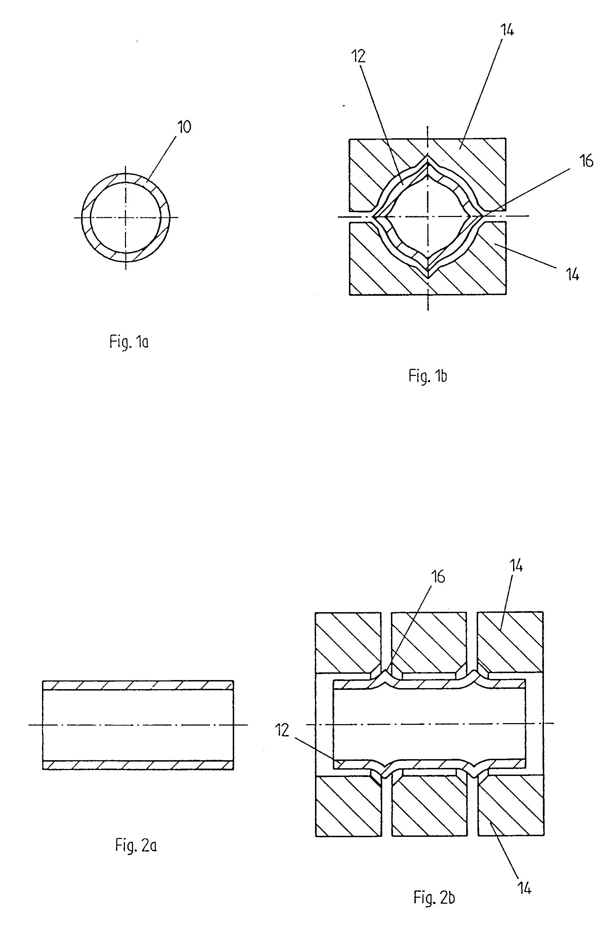

In Fig. 1a und 1b ist die Herstellung eines erfindungsgemäßen Rohres mit Längsrippen 16, wobei Fig. 1a das Ausgangsrohr 10 im Querschnitt darstellt und Fig. 1b das umgeformte Rohr in der Form 14, gezeigt. Deutlich sind die angeformten Rippen 16 zu erkennen, die zu einer Verstärkung des Rohrs gegenüber Krafteinwirkung mit einer Komponente senkrecht zur Rohrlängsachse führen.

In Fig. 2 ist die Herstellung eines Rohres 12 mit Querrippen 16 dargestellt, die dieses Rohr bspw. in Längsrichtung leichter stauchbar gestalten. Derartige Rohre 12 mit mindestens einer Querrippe können beispielsweise als Trägerteile in Automobilen und dergleichen, eingesetzt werden, wobei die Fig. 2 a wiederum das Ausgangsrohr 10 zeigt und Fig. 2b das in der Form umgeformte Rohr 12 im Längsschnitt.

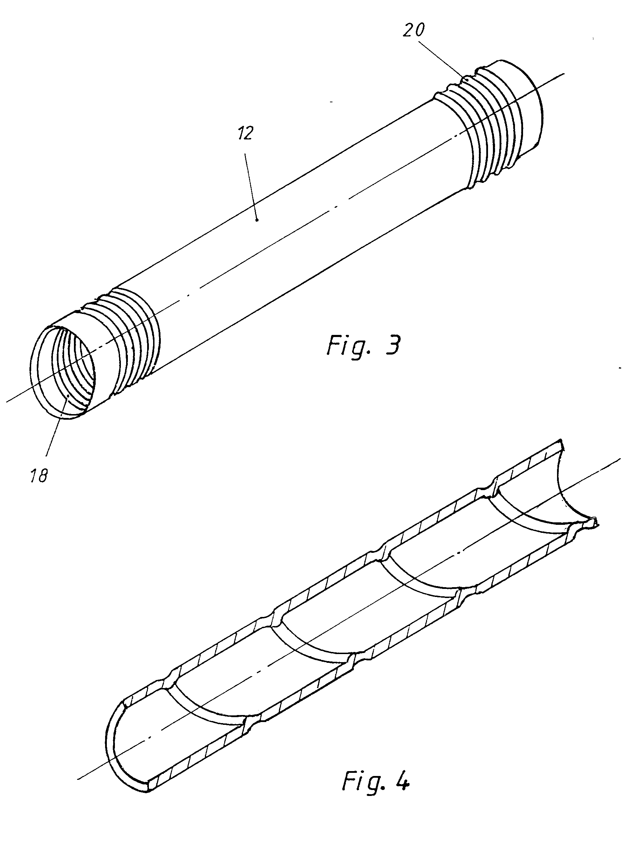

In Figur 3 ist ein Rohr 12 mit einem durch eine spiralförmige Rippe 16 gebildeten Außengewinde 20 an einem Rohrende und einem mittels einer innen ausgeformten helixförmigen Rippe als Innengewinde 18 dargestellt, das erfindungsgemäß ausgeformt wurde, indem ein außenliegendes Formwerkzeug mit entsprechenden Erhebungen oder das Rohrende mit dem Außengewinde 20 als hohles Innenwerkzeug, das den hydraulischen Umformdruck an das außen liegende Rohr weiterleitet, verwendet wurde, um diese Form herzustellen.

Dieses Außengewinde 20 dient in üblicher Weise zum Verschrauben von Rohren 12, 12 miteinander, wobei das Gewindeschneiden zur Herstellung von mit Schraubgewinden versehener Rohre als solches entfällt und ein guter Paßsitz durch Verwendung des mit dem ersten Rohr zu verschraubenden zweiten Rohres auch als Werkzeug eingesetzt werden kann. Hierdurch kann eine erhebliche Materialersparnis bei gleichen mechanischen Eigenschaften gegenüber bekannten Rohren, da die Materialschwächung beim Gewindeschneiden entfällt, erzielt werden.

In Fig. 4 ist ein Rohr mit einer schraubenförmigen Rippe 16 auf der Rohrinnenwand dargestellt, wobei bei dieser Ausführungsform die Rippe 16 des Rohres 12 bspw. dazu dienen kann, im Rohr geführte Fluide zu turbulentem Fluß zu veranlassen. Derartige Rippen können aber auch in besonderen Fällen die Torsionsfestigkeit des damit ausgestatteten Rohrs verbessern.

Selbstverständlich ist dies nicht die einzige Möglichkeit, mit schraubenförmigen Rippen 16 versehene Rohr 12 einzusetzen, so daß dies lediglich als beispielhafter Fall für die möglichen Einsetzbarkeiten der erfindungsgemäßen Rohre gesehen werden kann.

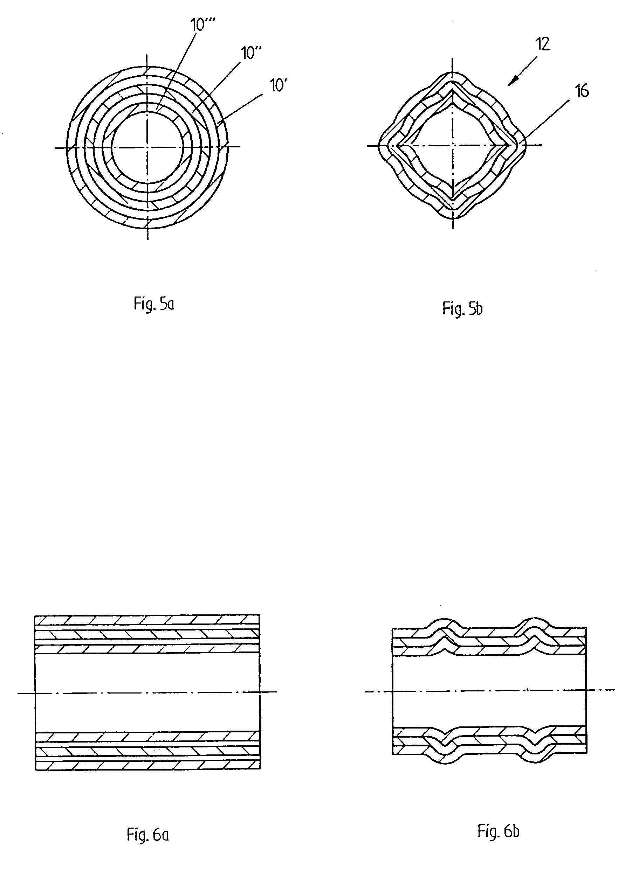

Erfindungsgemäß ist es auch möglich, mehrschichtige Rohre herzustellen, so daß in den Fig. 5, 6, 7 und 8 die Rohre 12 der Fig. 1 bis 4, jeweils mit mehrschichtigen Ausgangsrohren 10, 10',10''' hergestellt, erläutert sind.

In der Fig. 5 ist ein bevorzugtes Verfahren zur Herstellung von mehrwandigen Rohren 12 mit Rippen 16 dargestellt, bei dem zunächst ineinandergesteckte Rohre unterschiedlicher Materialien 10',10'', 10''' durch den Innendruck aneinander angelegt und gleichzeitig gemeinsam umgeformt werden, so daß ihre Schichten parallel zueinander gleichzeitig in Rippenform gebracht sind.

In Fig. 6a und b ist die Herstellung eines mehrschichtigen Rohrs mit Querrippen 16 dargestellt, wobei auch hier, wie aus Fig. 6a ersichtlich, von mehreren ineinander angeordneten rohrförmigen Hohlkörpern ausgegangen wird. In Fig. 6b ist das umgeformte mehrlagige Rohr mit Rippen gezeigt.

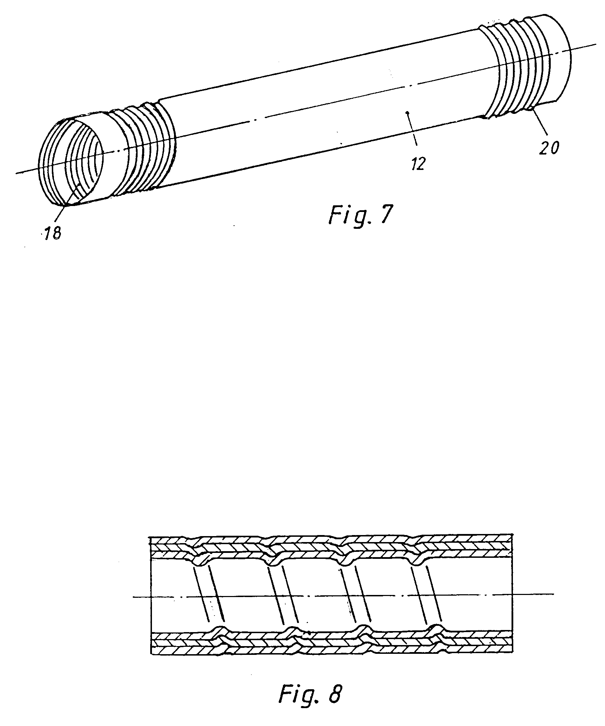

Fig. 7 zeigt eine perspektivische Darstellung eines erfindungsgemäßen mehrschichtigen Rohr mit Außen- 20 und Innengewinde 18, wie es sich bspw. zum Anschrauben bzw. Verschrauben mit anderen Rohren eignet, das ebenfalls aus dem Ausgangsprodukt, das in Fig. 5a dargestellt ist, produziert wurde und in Fig. 8 ist eine perspektivische Darstellung eines Längsschnittes durch ein erfindungsgemäßes mehrschichtiges Rohr mit sprialförmiger Innenrippe 16 gezeigt, das aus dem in Fig. 5a dargestellten Ausgangsprodukt formbar ist.

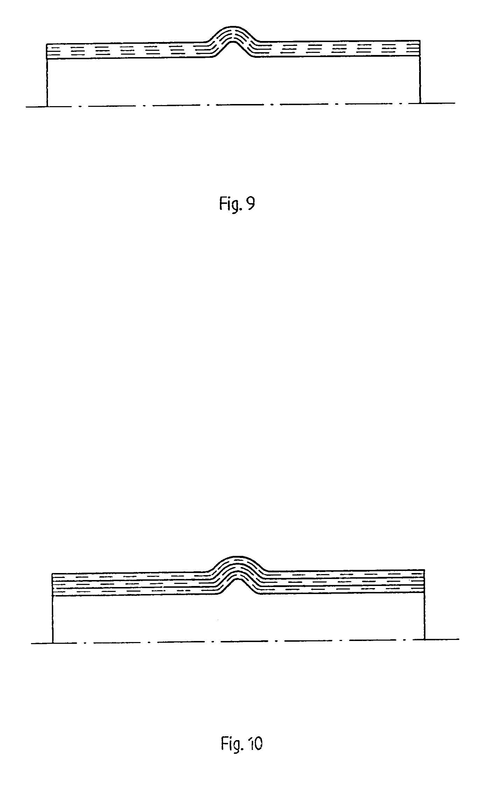

In Fig. 9 ist schematisch der Faserverlauf in einem Wandteil einer erfindungsgemäßen einschichtigen Rohrwand mit Rippe 16 dargestellt; und in Fig. 10 ist der Faserverlauf in einem Wandteil eines erfindungsgemäßen mehrschichtigen Rohrwandteils mit Rippe 16 dargestellt, woraus sich ergibt, daß der Faserverlauf in beiden Fällen die Rohrwand nicht schwächt.

Selbstverständlich ist die Erfindung keineswegs nur auf die in den Zeichnungen dargestellten Ausführungsformen von mit Rippen versehenen Rohren beschränkt - die Anzahl und symmetrische oder unsymmetrische Anordnung der Rippen kann je nach Einsatzzweck variiert werden und ist keinesfalls auf die erläuterten Ausführungsbeispiele beschränkt.

## Patentansprüche

1. Ein- oder mehrschichtiges Metallrohr mit mindestens einer außen oder innen angeordneten Rippe in der Rohrwand, dadurch gekennzeichnet, daß die Rippen (16) in der der Rohrwand so ausgebildet sind, daß der Faserverlauf des Metalls/der Metalle im wesentlichen parallel zur Rohraußen- oder - innenwand ist.

2. Rohr nach Anspruch 1, dadurch gekennzeichnet, daß das Metallrohr (12) mindestens ein kalt umformbares Metall, wie Stahl, Kupfer, Aluminium, Titan, Nickel oder Legierungen derselben aufweist.

3. Rohr nach Anspruch 1, dadurch gekennzeichnet, daß das Rohr (12) aus mehreren aufeinanderliegenden Schichten gleicher oder unterschiedlicher Materialien besteht, die parallel zueinander verlaufen.

4. Rohr nach Anspruch 3, dadurch gekennzeichnet, daß die verschiedenen Materialschichten (10, 10', 10'') zumindest teilweise unterschiedliche Metalle sind.

5. Rohr nach einem der Ansprüche 3 oder 4, dadurch gekennzeichnet, daß mindestens eine der Materialschichten (10, 10 ',10 '') Kunststoff, Glas oder Keramik ist.

6. Rohr nach einem der vorangehenden Ansprüche, dadurch gekennzeichnet, daß die Rippen (16) Längsrippen, Querrippen oder helix- oder schraubenförmig auf dem Rohr (12) verlaufend sind.

7. Rohr nach einem der vorangehenden Ansprüche, dadurch gekennzeichnet, daß die Rippen (16) innen Rohrmaterial aufweisen und nicht hohl sind.

8. Rohr nach einem der vorangehenden Ansprüche, dadurch gekennzeichnet, daß die Wanddicke des Rohrs bei Verwendung eines Stahlrohrs als Ausgangsrohr zwischen 0,8 und 10 mm, bevorzugt zwischen 1 und 4 mm, beträgt.

9. Verfahren zum Herstellen eines Metallrohrs mit Rippen nach einem der vorangehenden Ansprüche, gekennzeichnet durch
Einbringen eines Ausgangsrohrs in eine Form mit beweglichen Teilen;
Schließen der Form um das Ausgangsrohr;
Abdichten der Rohrenden, sowie
Einbringen eines Fluids unter hohem Druck in das Innere des Ausgangsrohrs zur Abstützung desselben;
gegebenenfalls gleichzeitiges Nachführen von Rohrmaterial in Rohrlängsachsenrichtung unter Bewegung von beweglichen Formteilen, wodurch die Rohrwand entsprechend der Form nach außen gedrückt und unter Abstützung durch das Fluid umgeformt wird; sowie
Druckabbau und Öffnen der Form.

10. Verfahren nach Anspruch 9, dadurch gekennzeichnet, daß das Ausgangsrohr für ein mehrschichtiges Rohr aus mehreren ineinander angeordneten, nicht notwendigerweise paßgenau aufeinanderliegenden Metallrohren gebildet wird, wobei das Metall der Metallrohre gleich oder unterschiedlich sein kann, wobei nach Durchführung des Verfahrens die verschiedenen Rohrschichten fest aufeinanderliegen und über Formschluß im wesentlichen parallel zueinander, auch in den ausgebildeten Rippen, verlaufen.

11. Verfahren nach Anspruch 9 oder 10, dadurch gekennzeichnet, daß als Ausgangsrohr ein nahtloses Rohr verwendet wird.
